(19) Europäisches Patentamt / European Patent Office / Office européen des brevets

(11) **EP 4 015 553 A1**

(12) **EUROPEAN PATENT APPLICATION**


(43) Date of publication:
**22.06.2022 Bulletin 2022/25**

(21) Application number: **20216019.8**

(22) Date of filing: **21.12.2020**

(51) International Patent Classification (IPC):
***C08G 18/10*** *(2006.01)* ***C08G 18/12*** *(2006.01)*
***C08G 18/38*** *(2006.01)* ***C08G 18/48*** *(2006.01)*
***C08G 18/50*** *(2006.01)* ***C08G 18/76*** *(2006.01)*

(52) Cooperative Patent Classification (CPC):
(C-Sets available)
**C08G 18/3893; C08G 18/10; C08G 18/12; C08G 18/482; C08G 18/4825; C08G 18/4833; C08G 18/4841; C08G 18/5021; C08G 18/7664; C08G 18/7671** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**



(71) Applicant: **Covestro Deutschland AG**
**51373 Leverkusen (DE)**

(72) Inventor: **The designation of the inventor has not yet been filed**

(74) Representative: **Levpat**
**c/o Covestro AG**
**Gebäude 4825**
**51365 Leverkusen (DE)**


(54) **A METHOD FOR PREPARING A MOISTURE-RESISTANT POLYURETHANE PRIMER**


(57) The present invention relates to a method for preparing a moisture-resistant polyurethane primer, a moisture-resistant polyurethane primer obtained by the method and use thereof.





Processed by Luminess, 75001 PARIS (FR)



**(Cont. next page)**

(52) Cooperative Patent Classification (CPC): (Cont.)

C-Sets
**C08G 18/10, C08G 18/3893;**
**C08G 18/12, C08G 18/3893**

## Description

### Technical Field

The present invention belongs to the field of polyurethane primer, and particularly relates to a method for preparing a moisture-resistant polyurethane primer.

### Background technology

Waterproofing of concrete is a widespread need in the industry. Polyurethane/polyurea spray elastomers have excellent mechanical properties, but often suffer from adhesion to concrete surfaces. The adhesion is greatly influenced by the water content of concrete, the degree of exposure during construction, the humidity in the air, and the like. Composite plates, such as calcium silicate plate (full name: fiber reinforced calcium silicate plate), are widely used in civil and public building applications as new environmentally friendly building materials. As a decorative plate, it is mainly indoor applied to partitions, suspended ceilings, ceilings, wet house partitions, suspended ceilings and the like, and is mainly outdoor applied to exterior wall cladding, exterior wall veneering, exterior wall heat-insulating decorative plates and the like. All these applications require that the calcium silicate plate has good properties in strength and resistance to water, so as to ensure a long-lasting use of the plate. The calcium silicate plate itself has a poor surface densification, it is easy to cause poor adhesion force and even peeling of the surface paint film, it is also easy to absorb the moisture, and it is easy to cause the deformation of the plate body, the bubbling of the surface coating and other defects if the calcium silicate plate is improperly protected. Therefore, the use of a primer is very important.

CN 102442837A discloses an application of a UV penetration primer on a fiber reinforced cement plate, the UV penetration primer is based on a system of an epoxy acrylate and a polyester acrylate, the primer is coated on a substrate by roll coating, the surface leveling is carried out for 5-10 seconds, and then the UV energy of 500-700mj/cm2 is used for curing. The UV primer is advantageous in a high efficiency, but the adhesion property to substrates and the resistance to water and moisture are so so, and the investment in UV curing equipment is additionally necessary.

CN 105368260A discloses a two-component penetrating epoxy primer, which is solvent-based, and the thinner used in the formulation is an xylene solvent. The epoxy primer provides better adhesion and water resistance than UV, but the two-component system has a limited pot life, and in addition the emission of a large amount of solvent during construction and curing negatively impacts the operator health and the environment.

US 5115086 discloses that a primer solution produced by reacting a polyester based on a carboxylic acid and a diol with an isocyanate can promote the bonding strength of bonding to a metal substrate-glass by the subsequent fast curing of the polyurethane adhesive. A silane activator is coated on the glass prior to use of the primer.

US 5468317 discloses an automotive glass primer binder solution synthesized from the reaction of 2:1 an epoxy silane and an aminosilane with an epoxy resin and the like for bonding non-porous substrate-automotive glasses. The automotive glass primer binder synthesized by the reaction of this kind of silane and the epoxy resin and the like can greatly improve the bonding strength of the prime and the non-porous substrate structure. This kind of primer can also improve the bonding strength with the subsequently applied polyurethane fast curing adhesive.

CN 103113819B discloses a polyurethane primer prepared based on a primer acrylic modified isocyanate mixed with a silane compound, a polyisocyanate and a non-reactive thermoplastic resin, which has high initial bonding strength to different substrates; the curing speed is high, the bonding is firm, the polyurethane adhesive/sealant can be coated without waiting, so that the production efficiency of an automobile glass assembly line can be improved.

CN 1871302B discloses a composition produced by using a mixture of two or more polyols and a method for producing said composition. The invention also relates to the use of said composition as an adhesive, a sealant, a surface coating agent, a filler or for producing a molded part.

Despite the above disclosures, there is still a need for an improved method for preparing a moisture-resistant polyurethane primer that is more suitable for industrial production.

### Summary of the Invention

According to one aspect of the present invention, there is provided a method for preparing a moisture-resistant polyurethane primer, which is prepared from a primer composition comprising the following components:

Component I, a polyurethane prepolymer, which is prepared from a polyurethane reaction system comprising the following components:

Component A, comprising: a polyisocyanate;

Component B, comprising:

B1) at least one polyamine-initiated polyether polyol having a functionality of 2-6, preferably 4-6, and a hydroxyl value of 10-1200 mgKOH/g, preferably 15-800 mgKOH/g, more preferably 20-200 mgKOH/g (test method GB/T 12008.3-2009), preferably in a proportion of 10-60wt%, preferably 15-40wt%, based on the total weight of the component B;

optionally, B2) at least one polyether polyol having a functionality of 2-4, preferably 2-3, and a hydroxyl value of 10-400 mgKOH/g, preferably 20-200 mgKOH/g, particularly preferably 20-60 mgKOH/g, preferably in a proportion of 1-50 wt%, preferably 5-40 wt%, more preferably 10-30 wt%, based on the total weight of the component B;

Component II, based on the total weight of the primer composition, 0.5-8wt%, preferably 1-5wt%, more preferably 1-3wt% of at least one compound having the following general formula (i):

(i) $Y\text{-}R1\text{-}Si\text{-}(OCH_3)_nX_{3-n}$

wherein, X is independently selected from: Cl, $CH_3O$-, $C_2H_5O$-, $(CH_3)_2CH$-O-, $CH_3OCH_2CH_2O$-,

R1 is an alkylene group having 1-20 carbon atoms, preferably 1-10 carbon atoms;

Y is selected from vinyl, epoxy, alkyl, aryl and isocyanate groups,

n is 1-3;

Component III, at least one solvent oil having a boiling range of 80-200°C, preferably 120-200°C, in a proportion of 0-90wt%, preferably 20-80wt%, particularly preferably 35-75wt%, based on the total weight of the primer composition.

Preferably, the compound having the general formula (i) as said Component II is selected from at least one of alkyldimethoxysilane, trimethoxysilane, vinyltrimethoxysilane, gamma-ureidopropyltrimethoxysilane, 3-isocyanatopropyldiethoxymethoxysilane, 3-(2,3-epoxypropoxy)propyltrimethoxysilane, 3-isocyanatopropyltrimethoxysilane, gamma-methylacryloyloxypropyltrimethoxysilane or any mixture thereof, preferably 3-(2,3-epoxypropoxy)propyltrimethoxysilane and/or vinyltrimethoxysilane, particularly preferably vinyltrimethoxysilane.

Preferably, said component A comprises A1) a polyisocyanate having a functionality of ≥2, preferably 2.1-3.5, and a viscosity at 25°C of less than 1,000 mPa.s, preferably 50-700 mPa.s (GB/T1723-93).

Preferably, said polyurethane prepolymer has an NCO content of 5-50wt%, preferably 8-32wt%, more preferably 9-26wt% (GB/T 12009.4-2016), based on the total weight of the polyurethane prepolymer.

Preferably, the solvent oil as said Component III is selected from at least one of paraffinic and naphthenic solvent oils.

Preferably, said component B further comprises at least one catalyst.

Preferably, the method further includes the following steps:

Putting said component A into a reaction vessel at a temperature of 60-90°C, preferably 60-70°C, adding the component B under stirring, reacting for 2-4 hours, preferably 2 hours, and then cooling the reaction mixture to 20-35°C to give the polyurethane prepolymer as the component I;

Adding the component II and the component III into the component I, and uniformly mixing to give the moisture-resistant polyurethane primer.

We have surprisingly found that the method of the present invention, comprising various components such as an appropriate polyurethane prepolymer, a compound of general formula (i) (a silane coupling agent) and a solvent oil, can significantly improve the problem of the surface foaming on the wet composite plate (e.g. calcium silicate plate or concrete plate) caused by the reaction of isocyanate and water. In addition, by using the moisture-resistant polyurethane primer obtained by the method of the present invention, and then spraying the polyurethane/polyurea elastomer, the primer construction and drying efficiency is higher than that of the traditional epoxy resin primer, and furthermore the pinholes of the polyurethane/polyurea elastomer or the coating sprayed on the concrete or the calcium silicate plate can be comprehensively detected by adopting a high-voltage electric spark equipment, which cannot be achieved by the traditional epoxy resin primer. Therefore, the phenomena such as the peeling and the flaking of the large-area sprayed polyurea/polyurethane in the high-speed railway concrete with the epoxy primer-spraying the polyurea/polyurethane for water resistance can be greatly avoided.

A further aspect of the present invention is to provide a moisture-resistant polyurethane primer, which is obtained by the method for preparing the moisture-resistant polyurethane primer according to the present invention.

A further aspect of the present invention is to provide use of the moisture-resistant polyurethane primer obtained by the method for preparing the moisture-resistant polyurethane primer of the present invention in preparing a composite plate.

Preferably, the composite plate is selected from a calcium silicate plate, a fiber reinforced calcium silicate plate and a concrete plate.

A further aspect of the present invention is to provide a method for preparing a composite plate, comprising: coating the outer surface of the composite plate, preferably a calcium silicate plate, a fiber reinforced calcium silicate plate or a concrete plate with the moisture-resistant polyurethane primer obtained by the method for preparing a moisture-resistant polyurethane primer according to the present invention.

Preferably, the composite plate with the primer comprising the compound of general formula (i) has a higher surface bonding strength than the composite plate without the primer comprising the compound of general formula (i) by ≥30%, preferably ≥50% (test method according to GB/T528-2009).

A further aspect of the present invention is to provide a composite plate, which is obtained by the method for preparing a composite plate of the present invention.

Preferably, among said composite plate, the calcium silicate plate, the fiber reinforced calcium silicate plate or the concrete plate has a bonding strength of ≥1.5 N/mm2, preferably ≥1.8 N/mm2 (test method according to GB/T528-2009).

Preferably, the composite plate obtained with the primer comprising the compound of general formula (i) has a higher surface bonding strength than the composite plate obtained without the primer comprising the compound of general formula (i) by ≥30%, preferably ≥50% (test method according to GB/T528-2009).

The composite plate of the present invention is preferably a calcium silicate plate, a fiber reinforced calcium silicate plate or a concrete plate.

Preferably, the composite plate with said polyurethane primer of the present invention, preferably the calcium silicate plate, the fiber reinforced calcium silicate plate or the concrete plate with the polyurethane primer has a reduced tack-free time than the composite plate, preferably the calcium silicate plate, the fiber reinforced calcium silicate plate or the concrete plate without the polyurethane primer of the present invention (with ethylene oxide primer) by ≥90%, preferably ≥98%.

Preferably, the composite plate has a tack-free time of ≤10 minutes, preferably ≤8 minutes. Tack-free time is determined according to GB/T13477.5-2002. "Tack-free" means that when the surface of the composite plate is touched with a finger, it feels sticky, but no primer gets on the finger. Thus, "tack-free time" refers to the period of time from applying a primer onto a glass surface to the point at which the resulting composite plate is tack-free.

Preferably, the composite plate has a hard drying time of ≤70 minutes, preferably ≤60 minutes. Hard drying time is determined according to GB/T13477.5-2002.

Through the repeated experiments, we have surprisingly found that the method of the present invention, comprising various components such as an appropriate polyurethane prepolymer, a compound of general formula (i) and a solvent oil, for preparing the moisture-resistant polyurethane primer, can significantly improve the surface condition of the wet composite plate, reduce or even eliminate the problem of surface foaming, and also obviously improve the tack-free time and the hard drying time of the surface of the composite plate, thereby improving the production efficiency and saving the time and the cost.

**Detailed description of the invention**The following describes the specific embodiments for carrying out the present invention.

One aspect of the present invention is provided a method for preparing a moisture-resistant polyurethane primer, which is prepared from a primer composition comprising the following components:

Component I, a polyurethane prepolymer, which is prepared from a polyurethane reaction system comprising the following components:

Component A, comprising: a polyisocyanate;

Component B, comprising:

B1) at least one polyamine-initiated polyether polyol having a functionality of 2-6, preferably 4-6, and a hydroxyl value of 10-1200 mgKOH/g, preferably 15-800 mgKOH/g, more preferably 20-200 mgKOH/g (test method GB/T 12008.3-2009), preferably in a proportion of 10-60wt%, preferably 15-40wt%, based on the total weight of the component B;

optionally, B2) at least one polyether polyol having a functionality of 2-4, preferably 2-3, and a hydroxyl value of 10-400 mgKOH/g, preferably 20-200 mgKOH/g, in particular preferably 25-60 mgKOH/g, preferably in a proportion of 1-50 wt%, preferably 5-40 wt%, particularly preferably 10-30 wt%, based on the total weight of the component B;

Component II, based on the total weight of the primer composition, 0.5-8wt%, preferably 1-5wt%, more preferably 1-3wt% of a compound having the following general formula (i):

(i) $Y\text{-}R1\text{-}Si\text{-}(OCH_3)nX_{3\text{-}n}$

wherein, X is independently selected from: Cl, $CH_3O$-, $C_2H_5O$-, $(CH_3)_2CH$-O-, $CH_3OCH_2CH_2O$-,

R1 is an alkylene group having 1-20 carbon atoms, preferably 1-10 carbon atoms,

Y is selected from vinyl, epoxy, alkyl, aryl and isocyanate groups,

n is 1-3;

optionally, Component III, at least one solvent oil having a boiling range of 80-200°C, preferably 120-200°C (the boiling range is determined according to GB/T 615 -2006 at a pressure of 1013.25 mbar and a temperature of 0°C), in a proportion of 0-90wt%, preferably 20-80wt%, more preferably 30-75wt%, particularly preferably 35-75wt%, based on the total weight of the primer composition.

**Component A in component I: a polyisocyanate and a derived material thereof**

The component A contains one or more polyisocyanates and prepolymers thereof obtained by reaction with polyethers or polyester polyols. The polyisocyanate may be represented by a general formula R(NCO)n, wherein R represents an aliphatic hydrocarbon group having 2-18 carbon atoms, an aromatic hydrocarbon group having 6-15 carbon atoms, an araliphatic hydrocarbon group having 8-15 carbon atoms, and n = 2-4.

The polyisocyanate may also comprise isocyanates modified with a carbonized diamine (a carbodiimide), an allophanate, or an isocyanate, preferably, but not limited to, diphenylmethane diisocyanate, carbodiimide-modified diphenylmethane diisocyanate, isomers thereof, and mixtures thereof with their isomers.

The NCO% content of the various polyisocyanates and of the prepolymers thereof obtained by reaction with polyethers or polyester polyols is preferably, but not limited to, 5-50wt%, more preferably 8-32wt%, particularly preferably 9-26wt%.

The polyisocyanate is preferably, but not limited to, diphenylmethane-4,4'-diisocyanate (MDI), diphenylmethane-2,4'-diisocyanate (MDI), diphenylmethane-2,2'-diisocyanate (MDI), vinylene diisocyanate, tetramethylene-1,4-diisocyanate, hexamethylene diisocyanate (HDI), dodecylene 1,2-diisocyanate, cyclobutane-1,3-diisocyanate, cyclohexane-1,3-diisocyanate, cyclohexane-1,4-diisocyanate, 1-isocyanato-3,3,5-trimethyl-5-isocyanatomethylcyclohexane, hexahydrotoluene-2,4-diisocyanate, hexahydrophenyl-1,3-diisocyanate, hexahydrophenyl-1,4-diisocyanate, perhydro-diphenylmethane-2,4-diisocyanate, perhydro-diphenylmethane-4,4-diisocyanate, phenylene-1,3-diisocyanate, phenylene-1,4-diisocyanate, durene-1,4-diisocyanate, stilbene-1,4-diisocyanate, 3,3-dimethyl-4,4-diphenyldiisocyanate, toluene-2,4-diisocyanate (TDI), toluene-2,6-diisocyanate (TDI), diphenylmethane-4,4'-diisocyanate (MDI), diphenylmethane-2,4'-diisocyanate (MDI), diphenylmethane-2,2'-diisocyanate (MDI), isomers thereof, and mixtures thereof with their isomers; the polyisocyanate is preferably diphenylmethane diisocyanate, toluene diisocyanate or a combination thereof, particularly preferably diphenylmethane diisocyanate.

The polyisocyanate system of the present invention is preferably a polyisocyanate having a polymeric polyisocyanate system functionality of 2 or more in the polyisocyanate system and a viscosity of less than 1,000 m.Pas, more preferably the above-mentioned isocyanate has a functionality of 2.1-3.5 and a viscosity of 50-700 m.Pas (at a temperature of 25°C).

**Component B in component I: one or more polyols**

The component B comprises a polyether polyol mixture or a polyester polyol mixture, or a mixture of the two.

The polyether polyol mixture contains a polyether polyol prepared from a compound obtained by reacting a diol and/or a polyol as the initiator with an alkylene oxide compound. The polyether polyol prepared from a diol, a diamine, a polyol as the initiator is preferred, and the polyether polyol prepared from a diamine and/or a diol as the initiator is

particularly preferred.

The term "alkylene oxide compound" as used in the present invention generally refers to a compound having the following general formula (I):

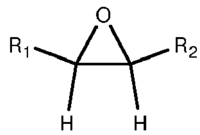

(I)

wherein R1 and R2 are independently selected from H, C1-C6 linear and branched alkyl, and phenyl and a substituted phenyl.

In some preferred embodiments, R1 and R2 are independently selected from H, methyl, ethyl, propyl, and phenyl.

The person skilled in the art knows the preparation method of "an alkylene oxide compound", which can be obtained, for example, by oxidation of an olefin compound.

Examples of the alkylene oxide compound useful in the present invention include, but are not limited to: 1,2-propylene oxide, 1,2-butylene oxide, 2,3-butylene oxide, styrene oxide or mixtures thereof.

The term "alkylene oxide compound" as used in the present invention also includes oxacycloalkanes, examples of which include, but are not limited to, tetrahydrofuran and oxetane.

When used in the present invention, the polyether polyol is a polyether polyol obtained by reacting a polyol as the initiator with an alkylene oxide compound. As used herein, the "polyol" refers to a compound containing at least two hydroxyl groups, having a functionality of 3-8 and a hydroxyl value of 18-1200 mgKOH/g. The hydroxyl group comprises a primary hydroxyl group, a secondary hydroxyl group, a tertiary hydroxyl group, or a combination thereof.

Examples of alcohols useful in the present invention include, but are not limited to, ethylene glycol, diethylene glycol, triethylene glycol, tetraethylene glycol, 1,2-propylene glycol, 1,3-propylene glycol, 1,4-butylene glycol, 3-methyl-1,5-pentylene glycol, 1,5-pentylene glycol, 1,6-hexylene glycol, 1,10-decanediol, glycerol, 1,2,4-butanetriol, 1,2,5-n-pentanetriol, 1,3,5-n-pentanetriol, 1,2,6-n-hexanetriol, 1,2,5-n-hexanetriol, 1,3,6-n-hexanetriol, trimethylolbutane, trimethylolpropane or di(trimethylolpropane), trimethylolethane, pentaerythritol or dipentaerythritol. The alkylene oxide compound is defined as above.

Those skilled in the art are familiar with the methods for measuring the hydroxyl value, such as those disclosed in Houben Weyl, Methoden der Organischen Chemie, vol. XIV/2 Makromolekulare Stoffe, p.17, Georg Thieme Verlag; Stuttgart 1963. The entire contents of this document are incorporated herein by reference.

The one or more polyols used in the polyurethane system of the present invention include polyester polyols, polyether polyols, polycarbonate polyols, polytetrahydrofuran polyols, polycaprolactone polyols, polymer polyols, or mixtures thereof, and may also include one or more vegetable oils or vegetable oil polyols, or mixtures thereof.

The polyester polyol is prepared by reacting a dicarboxylic acid or a dicarboxylic anhydride with a polyol. The dicarboxylic acid is preferably, but not limited to, an aliphatic carboxylic acid containing 2-12 carbon atoms, for example, succinic acid, malonic acid, glutaric acid, adipic acid, suberic acid, azelaic acid, sebacic acid, dodecanedioic acid, maleic acid, fumaric acid, phthalic acid, isophthalic acid, terephthalic acid, or a mixture thereof. The dicarboxylic anhydride is preferably, but not limited to, phthalic anhydride, tetrachlorophthalic anhydride, maleic anhydride, or a mixture thereof. The polyol is preferably, but not limited to, ethylene glycol, diethylene glycol, 1,2-propylene glycol, 1,3-propylene glycol, dipropylene glycol, 1,3-methylpropylene glycol, 1,4-butylene glycol, 1,5-pentylene glycol, 1,6-hexylene glycol, neopentyl glycol, 1,10-decanediol, glycerol, trimethylolpropane, and a mixture thereof. The polyester polyol also comprises a polyester polyol prepared from a lactone. The polyester polyol prepared from a lactone is preferably, but not limited to, ε-caprolactone. The polyether polyol may be prepared by well-known processes, for example by reacting an olefin oxide with an initiator in the presence of a catalyst. The catalyst is preferably, but not limited to, alkali hydroxide, alkali alkoxide, antimony pentachloride, boron fluoride etherate, or a mixture thereof. The alkylene oxide is preferably, but not limited to, tetrahydrofuran, ethylene oxide, 1,2-propylene oxide, 1,2-butylene oxide, 2,3-butylene oxide, styrene oxide, and mixtures thereof. The initiator is preferably but not limited to a polyhydroxyl compound, for example, water, ethylene glycol, 1,2-propylene glycol, 1,3-propylene glycol, diethylene glycol, glycerol, trimethylolpropane, pentaerythritol, sorbitol, sucrose, and mixtures thereof.

The polyether polyol is preferably, but not limited to, polypropylene oxide polyol, polyethylene oxide polyol, polytetrahydrofuran polyol, and mixtures thereof.

The polycarbonate polyol is preferably, but not limited to, a polycarbonate diol. The polycarbonate diol may be prepared by reacting a diol with a dihydrocarbyl or diaryl carbonate or phosgene. The diol is preferably, but not limited to, 1,2-propylene glycol, 1,3-propylene glycol, 1,4-butylene glycol, 1,5-pentylene glycol, 1,6-hexylene glycol, diethylene glycol, trioxymethylene glycol, and mixtures thereof. The dihydrocarbyl or diaryl carbonate is preferably, but not limited to, diphenyl carbonate.

The polymer polyol is a stable dispersion of solid reinforcing particles in a polyol liquid. Any polymer (or dispersion) polyol well known in the art may be included in the polyol component of the present invention. It includes, but is not limited to SAN polymer polyol, PHD polymer polyol, PIPA polymer polyol. The SAN polymer polyol is a polymer prepared by in situ polymerization of a mixture of acrylonitrile and styrene in a base polyol; the PHD polymer polyol is prepared by in situ polymerization of an isocyanate mixture and a diamine in a base polyol; and the PIPA polymer polyol is prepared by in situ polymerization of an isocyanate mixture and a diol and/or diol-amine in a base polyol.

The vegetable oil is a compound synthesized from an unsaturated fatty acid and glycerol or an oil/fat obtained from fruit, seed, and embryo of a plant. It is preferably but not limited to peanut oil, soybean oil, linseed oil, castor oil, rapeseed oil, palm oil.

The vegetable oil polyol is a polyol product initiated by one or more vegetable oils. The initiator of the vegetable oil polyol is widely available and preferably, but not limited to, soybean oil, palm oil, peanut oil, low erucic acid rapesed oil, and ricinoleic acid containing a hydroxyl group and an unsaturated double bond. The above-mentioned initiator is used to prepare the corresponding polyol by known preparation techniques such as cleavage, oxidation or transesterification.

The vegetable oil or vegetable oil polyol is preferably castor oil or a polyol prepared from castor oil.

The polyol component used in the present invention should have a combination of the appropriate functionality, hydroxyl value and viscosity. The proportion by weight of these polyol components in the isocyanate-reactive component of the present invention should be 10-70%, preferably 15%-60%, more preferably 30%-60%, based on 100wt% of the weight of the prepolymer component system.

The polyether polyol useful in the present invention include two types of polyols: a first polyether polyol and a second polyether polyol.

The first polyether polyol is a compound obtained by reacting one or more amines as the initiator with an epoxy compound.

As used herein, the term "amine" refers to a compound containing a primary amino group, a secondary amino group, a tertiary amino group, or a combination thereof. Examples of compounds useful as the amine in the present invention include, but are not limited to, triethanolamine, ethylene diamine, tolylene diamine, diethylene triamine, triethylene tetramine, and derivatives thereof, with ethylene diamine and tolylene diamine being particularly preferred. When used in the present invention, the epoxy compound has the meaning commonly used in the art, i.e., a compound containing an epoxy group. Examples of epoxy compounds useful in the present invention include, but are not limited to, ethylene oxide, propylene oxide, butylene oxide, and tetrahydrofuran, or combinations thereof.

The first polyether polyol useful in the present invention may be selected from a polyether polyol that is prepared by performing a ring-opening polymerization on ethylene diamine as the initiator and propylene oxide, a polyether polyol that is prepared by performing a ring-opening copolymerization on ethylene diamine as the initiator and ethylene oxide and propylene oxide, a polyether polyol that is prepared by performing a ring-opening polymerization on triethanolamine or diethanolamine as the initiator and propylene oxide, a polyether polyol that is prepared by performing a ring-opening copolymerization on triethanolamine or diethanolamine as the initiator and ethylene oxide and propylene oxide, a polyether polyol that is prepared by performing a ring-opening polymerization on toluylene diamine as the initiator and propylene oxide, a polyether polyol that is prepared by performing a ring-opening polymerization on toluylene diamine as the initiator and propylene oxide and capping with ethylene oxide, a polyether polyol that is prepared by performing a ring-opening polymerization on toluylene diamine as the initiator and ethylene oxide and capping with propylene oxide.

Those skilled in the art are familiar with the methods for measuring the hydroxyl value, such as those disclosed in Houben Weyl, Methoden der Organischen Chemie, vol. XIV/2 Makromolekulare Stoffe, p.17, Georg Thieme Verlag; Stuttgart 1963. The entire contents of this document are incorporated herein by reference.

Examples of the first polyether compositions useful in the present invention include, but are not limited to: GR403 (ethylene diamine as the initiator, hydroxyl value of 760), GR405 (ethylene diamine as the initiator, hydroxyl value of 450 mgKOH/g), GNT-400 (a mixture of toluene diamine and triethanolamine as the initiator, hydroxyl value of 400 mgKOH/g), commercially available from SINOPEC Shanghai Gaoqiao Petrochemical Co., Ltd., and Desmophen 4050E (ethylene diamine as the initiator, hydroxyl value of 620 mgKOH/g), Desmophen 4051B (ethylene diamine as the initiator, hydroxyl value of 470 mgKOH/g), commercially available from Bayer Material Science.

The second polyether polyol is a polyether polyol obtained by reacting one or more alcohols as the initiator with an epoxy compound. As used herein, the "alcohol" refers to a compound containing a hydroxyl group, including a primary hydroxyl group, a secondary hydroxyl group, a tertiary hydroxyl group, or a combination thereof. Examples of alcohols useful in the present invention include, but are not limited to, propylene glycol, glycerol, an epoxy compound defined as above.

In one embodiment of the invention, optionally, the second polyether polyol has a functionality of 2-4 and a hydroxyl value of 10-400 mgKOH/g, preferably a functionality of 2-3 and a hydroxyl value of 20-200 mgKOH/g, particularly preferably a functionality of 2-3 and a hydroxyl value of 25-60 mgKOH/g. The second polyether polyol is present in an amount of 1-50wt%, preferably 5-40wt%, particularly preferably 10-30wt%, based on 100wt% of the total weight of said

component B (polyol component).

Examples of the second polyether polyol that may be used in the present invention include, but are not limited to: Arcol 1021 (propylene glycol as the initiator, hydroxyl value of 56 mgKOH/g), Arcol 1011 (propylene glycol as the initiator, hydroxyl value of 112 mgKOH/g), Arcol 1026 (propylene glycol as the initiator, hydroxyl value of 28 mgKOH/g), Arcol 1032 (propylene glycol as the initiator, hydroxyl value of 35 mgKOH/g), Arcol 3553 and Arcol 1053 (glycerol as the initiator, hydroxyl value of 35 mgKOH/g) and Arcol 1362 (glycerol as the initiator, hydroxyl value of 28 mgKOH/g), Arcol 5603 and Arcol 5613 (glycerol as the initiator, hydroxyl value of 54 mgKOH/g), which are commercially available from Bayer Material Science; and GE 210 (propylene glycol as the initiator, hydroxyl value of 112 mgKOH/g), GE 220 (propylene glycol as the initiator, hydroxyl value of 112 mgKOH/g), GE 330 (glycerol as the initiator, hydroxyl value of 35 mgKOH/g), which are commercially available from Shanghai Gaoqiao Petrochemical Co., Ltd..

**Component II, one or more silane coupling agents:**

The silane coupling agent used in the present invention can be represented by the general formula (I)

$$Y\text{-}R^1\text{-}Si\text{-}(OCH_3)_nX_{3-n} \qquad (I)$$

wherein:

X is independently selected from: Cl, $CH_3O$-, $C_2H_5O$-, $(CH_3)_2CH$-O-, $CH_3OCH_2CH_2O$-;

$R^1$ is an alkylene group having 1-20 carbon atoms;

Y is selected from vinyl, epoxy, alkyl, aryl, and isocyanate groups, wherein $R^2$ is selected from an alkyl group having 1-10 carbon atoms;

n is 1-3.

In a preferred embodiment, in the silane coupling agent of formula (I), X is independently selected from: Cl, $CH_3O$-, $C_2H_5O$-, $(CH_3)_2CH$-O-, $CH_3OCH_2CH_2O$-, preferably alkyldimethoxysilane, particularly preferably trimethoxysilane;
In a preferred embodiment, in the silane coupling agent of formula (I), Y is selected from vinyl and epoxy groups, wherein the $R^2$ group is selected from an alkyl group having 1-10 carbon atoms, preferably 1-6 carbon atoms, more preferably 1-4 carbon atoms.

Even more preferably, $R^1$ is an alkylene group having 1-10 carbon atoms, preferably 1-6 carbon atoms, more preferably 1-4 carbon atoms.

As the example of the silane coupling agent, the following can be enumerated: vinyltrimethoxysilane, gamma-ureidopropyltrimethoxysilane, 3-isocyanatopropyldiethoxymethoxysilane, 3-isocyanatopropyltrimethoxysilane, 3-(2,3-epoxypropoxy)propyltrimethoxysilane, vinyltrimethoxysilane and gamma-methylacryloyloxypropyltrimethoxysilane and the like.

An electron-donating group: a negatively charged group, an alkyl group, an aryl group, a hydroxyl group, an alkoxy group, an amino group, a substituted amino group, an ester group, an amide group and the like. An electron-withdrawing group: an aldehyde group, a carbonyl group, a carboxyl group, a halogen atom, a sulfonic group, a haloalkyl group, a cyano group, a nitro group, a positively charged group, and the like. It will be notable that the reason why the hydroxyl group, the alkoxy group, the amino group, the substituted amino group, the ester group, and the amido group are regarded as the electron-donating group is because their electron-donating conjugation effect is larger than their electron-withdrawing induction effect, and the reason why the halogen atom is regarded as the electron-withdrawing group is because its electron-withdrawing induction effect is larger than its electron-donating conjugation effect.

The common electron-withdrawing group (electron-withdrawing induction effect is represented by - I): $NO_2$ > CN > F > Cl > Br > I > C≡C > $OCH_3$ > OH > $C_6H_5$ > C=C > H;
The common electron-donating groups (electron-donating induction effect is represented by +1): $(CH_3)_3C$ > $(CH_3)_2C$ > $CH_3CH_2$ > $CH_3$ > H.

The siloxane of the present invention is preferably a trimethoxysilane having an electron-withdrawing group that is non-reactive with an isocyanate group, more preferably vinyltrimethoxysilane. In a preferred embodiment, the amount of the silane coupling agent is 0.5-8 wt%, more preferably 1-5 wt%, more preferably 1-3 wt%, based on 100wt% of the total weight of the primer composition.

Surprisingly, we have found that the use of the silane coupling agent, particularly that having an appropriate structure, in the appropriate amount and suitable for use in the method of the present invention, can greatly reduce the

sensitivity of the isocyanate prepolymer to the moisture and the substrate moisture content, and can significantly reduce or even eliminate the foaming phenomena of the isocyanate prepolymer primer on the wet substrate.

**Component III solvent oil**

Optionally, the method of the present invention further comprises a solvent oil component.

The content of the solvent oil is 0-90wt%, preferably 20-80wt%, particularly preferably 35-75wt%, based on 100wt% of the total weight of the primer composition.

The solvent oil is a paraffinic and naphthenic solvent oil, preferably a medium-boiling solvent oil and a high-boiling solvent oil, the boiling range of which is 80-200°C (the boiling range is determined according to GB/T 615-2006 at a pressure of 1013.25 mbar and a temperature of 0°C), particularly preferably a high-boiling solvent oil, the boiling range of which is 120-200°C (the boiling range is determined according to GB/T 615-2006 at a pressure of 1013.25 mbar and a temperature of 0°C) .

The solvent oil is one of five petroleum products, and 400-500 solvent oils are commercially available. The solvent oil has a wide application. It includes a coating solvent oil (which is also known as a paint solvent oil) that is used in the largest amount, and additionally includes the solvent oil used for edible oil, printing ink, leather, pesticide, insecticide, rubber, cosmetics, perfume, medicine, electronic components and the like.

According to boiling ranges, the solvent oil can be divided into three types: the solvent oil with low boiling point, such as the No. 6 extraction solvent oil, having a boiling range of 60-90°C, the solvent oil with medium boiling point, such as the rubber solvent oil, having a boiling range of 80-120°C, and the solvent oil with high boiling point, such as the paint solvent oil, having a boiling range of 140-200°C. Generally, 60-90°C is called the extraction solvent oil, namely, 6# solvent oil as often said, 80-120°C is called the rubber solvent oil, namely, 120# solvent oil as often said, 140-200°C is called the paint solvent oil, namely, 150# solvent oil as often said. According to the present invention, the high boiling solvent oil is preferable, for example, the paint solvent oil, and the boiling range is 140-200°C.

The solvent oil can be divided into three types: paraffinic hydrocarbon, naphthenic hydrocarbon and aromatic hydrocarbon according to chemical structure. In fact, the solvent oil is a mixture of various structural hydrocarbons except for a few pure hydrocarbon compound solvent oils such as ethane, toluene and xylene. The solvent oil can be divided into paraffinic hydrocarbon, naphthenic hydrocarbon, aromatic hydrocarbon and the like according to chemical structure. So-called 6#, 120#, 200# solvent oils are the paraffinic hydrocarbon. The aromatic hydrocarbon refers to benzene, toluene, xylene, and the like. Paraffinic and naphthenic solvent oils are preferred in the present invention.

Through the repeated experiments, we have surprisingly found that the primer obtained by the method of the present invention for preparing the moisture-resistant polyurethane primer from various components such as an appropriate polyurethane prepolymer, a silane coupling agent and optionally an solvent oil significantly reduces or even eliminates the detrimental effect of the isocyanate on the water sensitivity, and can prepare the primer with high adhesion/bonding force, so that the high-quality, satisfactory-surface-condition and durable composite plate can be prepared. Meanwhile, the production efficiency is also improved, and the related industrial chain is optimized.

Unless defined otherwise, all technical and scientific terms used herein have the same meanings as commonly understood by those skilled in the art to which this invention belongs. To the extent that the definitions of terms used in this specification conflict with meanings commonly understood by those skilled in the art to which this invention belongs, the definitions set forth herein prevail.

The present invention is illustrated below by way of examples, but it should be understood that the scope of the present invention is not limited to these examples.

**Examples**

Explanation of the performance parameter tests in examples of the present application:

Functionality refers to the value calculated according to the industry formula: functionality = hydroxyl value * molecular weight/56100; wherein the molecular weight is measured by GPC high performance liquid chromatography;

Isocyanate index refers to a value calculated by the following formula:

$$\text{Isocyanate index (\%)} = \text{mole number of isocyanate group (NCO) group in A-component/mole number of isocyanate group-reactive group in B-component} \times 100\%$$

The NCO content refers to the content of NCO groups in a system and is measured by GB/T12009.4-2016.

The analytical measurements according to the present invention are carried out at 23°C unless otherwise stated.

As used in this specification, unless otherwise indicated, "a", "an", and "the" are intended to include "at least one" or "one or more". For example, "a component" refers to one or more components, and thus more than one component

may be considered and may be employed or used in the practice of the described embodiments.

**Raw materials and reagents**

Desmodur 1511L: polymeric diphenylmethane diisocyanate having a functionality of 2.7, an NCO group content of 30.5-32.5wt% and a viscosity at 25°C of 160-240 mPa.s, commercially available from Covestro Polymers (China) Co., Ltd..

Desmodur 1806: high 2,4'-diphenylmethane diisocyanate monomer having a functionality of 2, an NCO group content of 33.6wt% and a viscosity at 25°C of 12 mPa.s, commercially available from Covestro Polymers (China) Co., Ltd..

Desmodur 44M: 4,4-diphenylmethane diisocyanate monomer, having a functionality of 2 and an NCO group content of 33.6wt%, and being solid at room temperature, commercially available from Covestro Polymers (China) Co., Ltd..

150# solvent oil: a commercially available product.

First polyether polyol A (Desmophen 4059 EV): obtained through the reaction using ethylene diamine as the initiator and propylene oxide as the main body of polymerization reaction, having a hydroxyl value of 58 mgKOH/g, a functionality of 4 and a viscosity at 25°C of 650 mPa.s, and commercially available from Covestro Polymers (China) Co., Ltd..

First polyether polyol B (Desmophen V 155): obtained through the reaction using triethanolamine as the initiator and propylene oxide as the main body of polymerization reaction, having a hydroxyl value of 150 mgKOH/g, a hydroxy functionality of 3 and a viscosity at 25°C of 250 mPa.s, and commercially available from Covestro Polymers (China) Co., Ltd..

Second polyether polyol C: obtained through the reaction using propylene glycol as the initiator and propylene oxide as the main body of polymerization reaction, having a hydroxyl value of 56 mgKOH/g, a hydroxy functionality of 2 and a viscosity at 25°C of 310 mPa.s, for example, epoxy-modified polyether polyol NJ-220, commercially available from NingWu New Material Co., Ltd..

Second polyether polyol D: obtained through the reaction using propylene glycol as the initiator and a mixture of propylene oxide and ethylene oxide as the main body of polymerization reaction, having a hydroxyl value of 26 mgKOH/g, a hydroxy functionality of 2 and a viscosity at 25°C of 870 mPa.s, for example, epoxy-modified polyether polyol Desmophan 10WF31, commercially available from Covestro Polymers (China) Co., Ltd..

Second polyether polyol E: obtained through the reaction using propylene glycol as the initiator and propylene oxide as the main body of polymerization reaction, having a hydroxyl value of 112 mgKOH/g, a hydroxy functionality of 2 and a viscosity at 25°C of 160 mPa.s, for example, NJ-210D, commercially available from NingWu New Material Co., Ltd..

Baytec 52BC003: a modified polyurethane-polyurea elastomer for spraying, component A, commercially available from Covestro Polymers (China) Co., Ltd..

SBU isocyanate H601: a modified polyurethane-polyurea elastomer for spraying, component B, commercially available from Covestro Polymers (China) Co., Ltd.. The volume ratio of Baytec 52BC003/isocyanate H601 = 100/93.

Epoxy resin 128: commercially available epoxy resin commercial product-available from South Asia Plastics, Co. Ltd..

Crosslinker H-113: the modified aromatic amine crosslinker, commercially available from Jiangyin Hui Feng synthetic material company.

Reactive diluent D-1214: the epoxy resin reactive diluent, commercially available from Jiangyin Hui Feng synthetic material company.

Table 1 - silane raw material structure and name

| | | |
|---|---|---|
| A-171:<br>VTMO: | 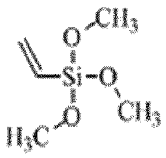 | Vinyltrimethoxysilane<br>Vinyltrimethoxysilane<br>Commercially available from Momentive Co. Ltd. |
| A-151<br>VTEO | 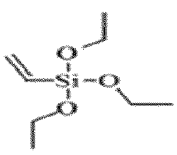 | Viny ltriethoxysilane<br>Viny ltriethoxysilane<br>Commercially available from Momentive Co. Ltd. |

(continued)

| | | |
|---|---|---|
| A 1630 | $CH_3Si(OCH_3)_3$ | Trimethoxysilane<br>Methy ltrimethoxysilane<br>Commercially available from Momentive Co. Ltd. |
| KH 560 | 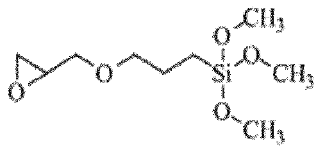 | 3-Glycidoxy propyl trimethoxy silane<br>3-(2,3-epoxypropoxy)propyltrimethoxysilane<br>Commercially available from Merver (Shanghai) Chemical Technology Co.. Ltd. |

Definition for the state of the substrate concrete:
Dry concrete surface: the concrete was produced before 28 days or more, and the water content of the concrete was less than 6%. The concrete was placed in air at the room temperature of 25°C for 24 hours, and subjected to a primer brush-coating test.

Wet concrete surface: the concrete was produced before 28 days or more; the concrete was soaked in distilled water for 24 hours at the room temperature of 25°C; after the surface moisture was wiped dry by using a napkin, the concrete was placed in air at 25°C for 1 hour, and subjected to a primer brush-coating test. The primer was directly brush-coated at room temperature.

Table 2-Definition for the foaming of the primer on the substrate concrete surface:

| Description of the foaming condition | Number |
|---|---|
| Very severe foaming: large area foaming, and open cell and peeling of foam | 5 |
| Severe foaming: limited area foaming, open cell and peeling of foam | 4 |
| Foaming: obviously limited foaming and no open cell and peeling of foam | 3 |
| Slightly foaming: visible small or sporadic foam, or a small area of blushing in the primer region. | 2 |
| Substantially no foaming: clear primer, no blushing region | 1 |

**Spraying or brush-coating the modified isocyanate primer**

The modified isocyanate primer system of the present invention could be coated on the concrete with a spraying or brush-coating method, the tack-free time of the primer was about 10 minutes, and could be properly adjusted according to the air temperature at the local construction time. The polyurethane elastomer spraying construction needed to be carried out within half an hour and finished within four hours after the primer construction.

**Spraying the polyurethane/polyurea elastomer**

High or low pressure equipment such as Unipre M10 (Germany) could be used to treat the Baytec 52BC003/SBU isocyanate H601 reactive spraying system. No air was required if the high pressure equipment was used to spray the coating, but if the low pressure equipment was used, a dry compressed air was required to be delivered to the stir head. These two-component equipments could deliver the two components and mix them in a specified ratio. And the output could be adjusted steplessly over a wide range. People could walk on the sprayed surface 15 minutes after the polyurethane elastomer was sprayed, and construction vehicles could run on the sprayed surface 30 minutes after the polyurethane elastomer was sprayed.

**Detection of bonding strength**

Detecting the bonding strength of the sprayed elastomer to the concrete construction surface: according to ASTM D 4541-2017, standard detection for the bonding strength of the sprayed elastomer to the concrete construction surface by means of a portable adhesion tester, After using the non-foaming primer, the bonding strength of the sprayed elastomer to the concrete construction surface the pulling strength needs to be ≧ 0.75N/mm$^2$ after 90-minute construction, and ≧ 1.5N/mm$^2$ after 24-hour construction.

**The synthesis method of the prepolymer of the present invention:**

The refrigerated 4,4-MDI solid was heated and melted for 8 hours in a water bath at 70°C in advance for standby. According to the components of the prepolymer formula, isocyanates were added into a reaction vessel in the following sequence: Desmodur 1511L →2,4-MDI →4,4-MDI. The temperature of the mixture was increased to 65°C under stirring. The polyether polyol was added gradually under stirring, wherein the temperature of the mixture during the addition and the reaction did not exceed 70°C at the maximum, and the polyether polyol should be added as quickly as possible. The reaction was carried out at 70°C for about 2 hours, in the case of using the non-amine initiator polyether the catalyst could be properly added according to actual conditions. The mixture was then cooled to 35°C. The product was sampled for NCO% under stirring. And when the product met the requirements, the product was subpackaged under the protection of dry nitrogen.

Table 3-Components for prepolymer synthesis (unit: wt%)

| Product name | Prepolymer 1 | Prepolymer 2 | Prepolymer 3 | Prepolymer 4 | Prepolymer 5 | Prepolymer 6 |
|---|---|---|---|---|---|---|
| First polyether polyol A | 21 | 21 | 20 | 11 | | |
| First polyether polyol B | | | | | 26 | |
| Second polyether polyol C | 22 | | 21 | 12 | 14 | 45 |
| Second polyether polyol D | | | | | | |
| Second polyether polyol E | | 22 | | | | |
| Desmodur 1806 | 5 | 29 | 3 | 30 | 30 | 28 |
| Desmodur 44M | 5 | 28 | 3 | 30 | 30 | 27 |
| 44V20 L | 47 | | 53 | 17 | | |
| NCO% | 16 | 16 | 16.5 | 24 | 16 | 16 |
| Viscosity at 25°C mPa· s | 5400 | 1600 | 6400 | 220 | 4000 | 600 |

Table 4-influence of the amount and type of siloxane on the foaming of the primer on the concrete surface (unit: wt%)

| Component | Comp Ex. 1 | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|
| Prepolymer 1 | 75 | 75 | 75 | 75 | 75 | 75 | 75 | 75 | 75 | 75 | 75 |
| 150# solvent oil | 24 | 24 | 22 | 20 | 24 | 22 | 20 | 24 | 22 | 24 | 22 |
| Vinyltriethoxysilane | | | | | | | | | | 1 | 3 |
| 3-(2,3-epoxypropoxy) propyltrimeth oxysilane | | | | | 1 | 3 | 5 | | | | |
| Trimethoxysilane | | | | | | | | 1 | 3 | | |
| Vinyltrimethoxysilane | | 1 | 3 | 5 | | | | | | | |
| Wet concrete, foaming condition | 5 | 1 | 1 | 1 | 2 | 1 | 1 | 3 | 2.5 | 3 | 2.5 |

(continued)

| Component | Comp Ex. 1 | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|
| Dry concrete, foaming condition | 2 | 1 | 1 | 1 | 1 | 1 | 1 | 1.5 | 1 | 1.5 | 1 |
| Baytec 52BC003/Iso H601 dry concrete bonding strength-N/MM$^2$ | 1.0 | ≥1.5 | ≥2.0 | ≥2.0 | ≥1.5 | ≥2.0 | ≥2.0 | >1.3 | ≥1.5 | >1.3 | ≥1.5 |

As could be seen from Table 4: Comparative Example 1 was a mixed system primer of a conventional prepolymer and a solvent oil, which foamed on the wet concrete surface when being coated on the wet concrete surface, the foaming phenomenon was relatively severe, and the bonding strength of the concrete was relatively low. Even if being coated on the dry concrete surface, the foaming existed on the concrete surface. In Examples 1-10, based on the components of Comparative Example 1, different types and amounts of siloxanes were added; and after being coated on the dry concrete surface, the foaming phenomena on the concrete surface were not substantially observed. When the wet concretes were coated with mixed system primers of conventional prepolymers and solvent oils, to which different types and amounts of siloxanes were added, the foaming condition was improved to a certain extent and the bonding strength to the concrete was greatly improved, although the improvement results of different siloxanes and different addition amounts were different. Siloxanes with electron-withdrawing groups, such as vinyltrimethoxysilane and 3-(2,3-epoxypropoxy)propyltrimethoxysilane, had an obvious effect of improving the foaming of the wet concrete surface. Siloxanes with electron-withdrawing groups, such as vinyltrimethoxysilane, had the best effect of avoiding the foaming of the primer.

Table 5-influence of the type of the prepolymer on the foaming of the primer on the concrete surface under the fixed type and amount of siloxane

| Component | Comp Ex. 1 | Ex. 1 | Ex. 11 | Ex. 12 | Ex. 13 | Ex. 14 |
|---|---|---|---|---|---|---|
| Prepolymer 1 | 75 | 75 | | | | |
| Prepolymer 2 | | | 75 | | | |
| Prepolymer 3 | | | | 75 | | |
| Prepolymer 4 | | | | | 75 | |
| Prepolymer 5 | | | | | | 75 |
| 150# solvent oil | 24 | 24 | 24 | 24 | 24 | 24 |
| Vinyltrimethoxysilane | 0 | 1 | 1 | 1 | 1 | 1 |
| Wet concrete, foaming condition | 5 | 1 | 1 | 1 | 2 | 1 |
| Dry concrete, foaming condition | 2 | 1 | 1 | 1 | 1 | 1 |

As could be seen from the experimental data of Table 5: under the condition that the type of siloxane was fixed as vinyltrimethoxysilane and the amount was fixed as one weight part, different mixed system primers of conventional prepolymers and solvent oils, for example Comparative Example 1 was a mixed system primer of a conventional prepolymer and a solvent oil, were coated on the wet concrete surface, and the foaming existed on the wet concrete surface, and the foaming phenomenon was relatively serious. When being coated on the dry concrete surface, a slight foaming existed on the concrete surface. The prepolymer components of Example 1, Example 11, Example 12, Example 13 and Example 14 were polyether polyols based on amines as the initiator, and after adding one weight part of vinyltrimethoxysilane, the resulting primers were coated on the dry and wet concrete surfaces, and substaintally no foaming phenomena were observed on the concrete surface.

The surface conditions of the composite plates obtained with the primers added with solvent oils could be greatly improved. Even for the dry concrete, when the polyurethane elastomer was further sprayed after the primer was sprayed/brushed, if the primer system had no siloxane but only had the prepolymer and the solvent oil, the excessive isocyanate would react with moisture over time, and a carbon dioxide isolation layer might gradually form between the

sprayed polyurethane elastomer and the concrete. The sprayed polyurethane elastomer was separated from the concrete by the expansion and shrink of the air along with the cold and hot circulation of the sun irradiation.

After the dry concrete surfaces were treated with the primer of Comparative Example 2 (based on epoxy resin 128/reactive diluent D-1214/crosslinker H-113) and the primers of Example 15 to Example 19 based on the prepolymers of the present invention, the detection result on the concrete after a 2 mm spraying treatment for water-resistance by spraying the polyurethane/polyurea elastomer Baytec 52BC003/SBU isocyanate H601 were shown in Table 6.

After the concrete was treated with the epoxy resin primer system, the tack-free time of the prime was more than 6 hours, and the hard drying time was more than 24 hours. It is necessary to wait for at least 6 hours before performing the polyurethane system spraying construction, and construction vehicles cannot run on the sprayed surface within 24 hours after the polyurethane was sprayed due to the hard drying of the epoxy resin. It can be proven that the primer obtained by the method of the present invention had better quality and was more suitable for the actual production.

Table 6 - Influence of primer on the bond quality of the polyurethane/polyurea elastomer to the concrete

| Component | Comp. Ex. 2 | Ex. 15 | Ex. 16 | Ex. 17 | Ex. 18 | Ex. 19 |
|---|---|---|---|---|---|---|
| Epoxy resin 128 | 90 | - | - | - | - | - |
| D-1214 | 10 | - | - | - | - | - |
| Crosslinker H-113 | 50 | - | - | - | - | - |
| Prepolymer 1 | - | 60 | 60 | - | - | - |
| Prepolymer 2 | - | - | - | 60 | - | - |
| Prepolymer 3 | - | - | - | - | 60 | - |
| Prepolymer 5 | - | - | - | - | - | 60 |
| 150# solvent oil | - | 40 | 40 | 40 | 40 | 40 |
| 3-(2,3-epoxypropoxy) propyltrimethoxysilane | - | 1 | - | - | - | - |
| Viny ltrimethoxysilane | - | - | 1 | 1 | 1 | 1 |
| Tack-free time of the primer/ | ≥ 6 hr | 10 min. | 10 min. | 10 min. | 10 min. | 10 min |
| Hard drying time of the primer/ | ≥12 hr | 60 min. | 60 min. | 60 min. | 60 min. | 60 min. |
| Spraying Baytec 52BC003/H601 on the dry concrete | 2mm | 2mm | 2mm | 2mm | 2mm | 2mm |
| High-voltage electric spark detection for the pinholes in the polyurethane-sprayed elastomer film | Fail | Very Good | Very Good | Very Good | Very Good | Very Good |

After the concrete was treated with the primer system-spraying system of the present invention, the tack-free time of the primer at a temperature of 23 °C was about 10 minutes, and the hard drying time was about 60 minutes. The polyurethane elastomer spraying construction needed to be scuritarted within half an hour after the primer construction and finished within four hours. People could walk on the sprayed surface 15 minutes after the polyurethane elastomer was sprayed, and construction vehicles could run on the sprayed surface 30 minutes after the polyurethane elastomer was sprayed.

In comparison, after the epoxy resin primer system was used for treating the concrete surface, because the electric resistance of the epoxy resin layer was too high, the recessive pinholes of the sprayed polyurethane elastomer could not be detected by high-voltage electric spark equipment, and the hidden dangers were brought to the bonding property of the subsequently sprayed polyurethane elastomer. However, after the concrete surface was treated with the primer system and the spraying system of the present invention, the recessive pinholes of the sprayed polyurethane elastomer could be detected comprehensively with the high-voltage electric spark equipment without dead angles. The bond quality of the sprayed polyurethane elastomer to the concrete was guaranteed.

The above data show that the method of the present invention for preparing the polyurethane primer, which comprises a polyurethane prepolymer, a silane coupling agent with the specific structure and/or content, a solvent oil and the like, significantly reduces or even eliminates the detrimental effect of the isocyanate on the water sensitivity, and can prepare the primer with high adhesion/bonding force, so that the high-quality, satisfactory-surface-condition and durable composite plate can be prepared. Meanwhile, the production efficiency is also improved, and the related industrial chain is optimized.

Although the present invention has been described in detail in the foregoing for the purpose of the present invention, it is to be understood that such detail is solely for the purpose of illustration and that various changes can be made by those skilled in the art without departing from the spirit and scope of the invention except as it may be limited by the claims.

## Claims

1. A method for preparing a moisture-resistant polyurethane primer, which is prepared from a primer composition comprising the following components:

   Component I, a polyurethane prepolymer, which is prepared from a polyurethane reaction system comprising the following components:

   Component A, comprising: a polyisocyanate;
   Component B, comprising:

   B1) at least one polyamine-initiated polyether polyol having a functionality of 2-6, preferably 4-6, and a hydroxyl value of 10-1200 mgKOH/g, preferably 15-800 mgKOH/g, more preferably 20-200 mgKOH/g (test method GB/T 12008.3-2009);
   Optionally, B2) at least one polyether polyol having a functionality of 2-4, preferably 2-3, and a hydroxyl value of 10-400 mgKOH/g, preferably 20-200 mgKOH/g, particularly preferably 25-60 mgKOH/g; (test method GB/T 12008.3-2009)

   Component II, based on the total weight of the primer composition, 0.5-8wt%, preferably 1-5wt%, more preferably 1-3wt% of at least one compound having the following general formula (i):

   (i) $Y\text{-}R1\text{-}Si\text{-}(OCH_3)nX_{3-n}$

   wherein, X is independently selected from: Cl, $CH_3O$-, $C_2H_5O$-, $(CH_3)_2CH$-O-, $CH_3OCH_2CH_2O$-,
   R1 is an alkylene group having 1-20 carbon atoms, preferably 1-10 carbon atoms,
   Y is selected from vinyl, epoxy, alkyl, aryl and isocyanate groups,
   n is 1-3;

   Optionally, Component III, at least one solvent oil having a boiling range of 80-200°C, preferably 120-200°C (according to GB/T 615-2006 at a pressure of 1013.25 mbar and a temperature of 0°C), in a proportion of 0-90wt%, preferably 20-80wt%, more preferably 30-75wt%, based on the total weight of the primer composition.

2. The method of claim 1, **characterized in that** the compound having the general formula (i) as said component II is selected from at least one of alkyldimethoxysilane, trimethoxysilane, vinyltrimethoxysilane, gamma-ureidopropyltrimethoxysilane, 3-(2,3-epoxypropoxy)propyltrimethoxysilane, 3-isocyanatopropyldiethoxymethoxysilane, 3-isocyanatopropyltrimethoxysilane, and gamma-methylacryloyloxypropyltrimethoxysilane, or any mixture thereof, preferably 3-(2,3-epoxypropoxy)propyltrimethoxysilane and/or vinyltrimethoxysilane, particularly preferably vinyltrimethoxysilane.

3. The method of claim 1 or 2, **characterized in that** said component A comprises A1) a polyisocyanate having a functionality of ≥2, preferably 2.1-3.5, and a viscosity at 25°C of less than 1,000 mPa.s, preferably 50-700 mPa.s (GB/T1723-93).

4. The method of claim 1 or 2, **characterized in that** said polyurethane prepolymer has an NCO content of 5-50wt%, preferably 8-32wt%, more preferably 9-26wt% (GB/T12009.4-2016), based on the total weight of the polyurethane prepolymer.

5. The method of claim 1 or 2, **characterized in that** the solvent oil as said component III is selected from at least one of paraffinic and naphthenic solvent oils.

6. The method of claim 1 or 2, **characterized in that** the method further comprises the following steps:

Putting said component A into a reaction vessel at a temperature of 60-90°C, preferably 60-70°C, adding the component B under stirring, reacting for 2-4 hours, preferably 2 hours, and then cooling the reaction mixture to 20-35°C to give the polyurethane prepolymer as said component I;
Adding the component II and the component III into the component I, and uniformly mixing to give the moisture-resistant polyurethane primer.

**7.** A moisture-resistant polyurethane primer obtained by the method for preparing a moisture-resistant polyurethane primer according to any of claims 1 to 6.

**8.** Use of the moisture-resistant polyurethane primer obtained by the method for preparing a moisture-resistant polyurethane primer according to any of claims 1 to 6 in the preparation of a composite plate.

**9.** A method for preparing a composite plate, comprising:
Coating the outer surface of the composite plate, preferably a calcium silicate plate, a fiber reinforced calcium silicate plate or a concrete plate with the moisture-resistant polyurethane primer obtained by the method for preparing a moisture-resistant polyurethane primer according to any of claims 1 to 6.

**10.** The method of claim 9, **characterized in that** the composite plate obtained with the primer comprising the compound of general formula (i) has a higher surface bonding strength than the composite plate obtained without the primer comprising the compound of general formula (i) by ≥30%, preferably ≥50% (test method according to GB/T528-2009).

**11.** A composite plate obtained by the method for preparing a composite plate according to claim 9 or 10.

**12.** The composite plate of claim 11, **characterized in that** the composite plate obtained with the primer comprising the compound of general formula (i) has a higher surface bonding strength than the composite plate obtained without the primer comprising the compound of general formula (i) by ≥30%, preferably ≥50% (test method according to GB/T528-2009).

**13.** The composite plate of claim 11 or 12, **characterized in that** the composite plate is preferably a calcium silicate plate, a fiber reinforced calcium silicate plate or a concrete plate.

**14.** The composite plate of claim 11 or 12, **characterized in that** the composite plate has a tack-free time of ≤ 10 minutes, preferably ≤ 8 minutes, tack-free time is determined according to GB/T13477.5-2002.

**15.** The composite plate of claim 11 or 12, **characterized in that** the composite plate has a hard drying time of ≤ 70 minutes, preferably ≤ 60 minutes, hard drying time is determined according to GB/T13477.5-2002.

Europäisches Patentamt
European Patent Office
Office européen des brevets

# EUROPEAN SEARCH REPORT

Application Number
EP 20 21 6019

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 101 839 613 B1 (APTECH [KR]; YOON JAE PILL [KR]; LEE KWON HEE [KR]) 16 March 2018 (2018-03-16) * paragraph [0059]; examples 1-5 * ----- | 1-15 | INV. C08G18/10 C08G18/12 C08G18/38 C08G18/48 C08G18/50 C08G18/76 |

TECHNICAL FIELDS SEARCHED (IPC)
C08G

The present search report has been drawn up for all claims

1

| Place of search | Date of completion of the search | Examiner |
|---|---|---|
| Munich | 16 June 2021 | Bergmeier, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 20 21 6019

This annex lists the patent family members relating to the patent documents cited in the above-mentioned European search report. The members are as contained in the European Patent Office EDP file on
The European Patent Office is in no way liable for these particulars which are merely given for the purpose of information.

16-06-2021

| Patent document cited in search report | Publication date | Patent family member(s) | Publication date |
|---|---|---|---|
| KR 101839613 B1 | 16-03-2018 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 102442837 A
- CN 105368260 A
- US 5115086 A
- US 5468317 A
- CN 103113819 B
- CN 1871302 B


### Non-patent literature cited in the description


- Makromolekulare Stoffe. Houben Weyl, Methoden der Organischen Chemie. Georg Thieme Verlag, 1963, vol. XIV/2, 17